# EUROPÄISCHE PATENTSCHRIFT

(11) **EP 1 995 576 B1**
(45) Veröffentlichungstag und Bekanntmachung des Hinweises auf die Patenterteilung: **20.04.2011**
(21) Anmeldenummer: 07090099.8
(22) Anmeldetag: 23.05.2007
(51) Int. Cl.: G01J 3/26, G01J 3/36, G01J 3/427

(54) **Anordnung für die Detektion von Stoffen und/oder Stoffkonzentrationen mit durchstimmbarem Fabry-Perot-Interferometer**
Assembly for detecting substances and/or substances concentrations with a fully adjustable Fabry-Perot interferometer
Agencement pour la détection de matières et/ou de concentrations de matières doté d'un interféromètre Fabry-Perot accordable

(43) Veröffentlichungstag der Anmeldung: 26.11.2008
(73) Patentinhaber: InfraTec GmbH, 01217 Dresden (DE)
(72) Erfinder: Neumann, Norbert, Dr. Ing., 01744 Dippoldiswalde (DE); Eberman, Martin, Dipl.-Ing., 01796 Pirna (DE); Heinze, Matthias, Dr.-Ing., 01157 Dresden (DE)
(74) Vertreter: Pfenning, Meinig & Partner GbR

(56) Entgegenhaltungen:
- EP-A1- 0 536 727
- US-A- 5 646 729
- NORBERT NEUMANN, MARTIN EBERMANN, KARLA HILLER, AND STEFFEN KURTH: "Tunable infrared detector with integrated micromachined Fabry-Perot filter" PROCEEDINGS OF SPIE -MOEMS AND MINIATURIZED SYSTEMS VI, Bd. 6466, Januar 2007 (2007-01), Seiten 646606-1-646606-12, XP002455060

## Beschreibung

Die Erfindung betrifft eine Anordnung zur Bestimmung von Stoffen und/oder Stoffkonzentrationen, die in unterschiedlichsten Fluiden und insbesondere Gasen, die ein Gemisch einer Vielzahl von Stoffen enthalten können, die mit einem durchstimmbaren Fabry-Perot-Interferometer ausgebildet ist, das mit mikromechanischen Mitteln gefertigt werden kann. Unterschiedliche Stoffe können dabei zeitgleich in unterschiedlichen Spektralbereichen analysiert werden. Sie kann dabei für die Bestimmung von in Gemischen mit anderen Stoffen enthaltenen Gasen, wie z.B. Methan, Kohlendioxid, Kohlenmonoxid aber auch höher molekularer chemischer Verbindungen eingesetzt werden.

### Stand der Technik

Zur Analyse von Stoffen und Stoffkonzentrationen in Gemischen werden zunehmend infrarot-optische Verfahren eingesetzt. Die stoffspezifischen Absorptionsbanden hinterlassen bei polychromatischer Durchstrahlung der Probe vorwiegend im infraroten Wellenlängenbereich eine charakteristische spektrale Zusammensetzung der Strahlung. Neben aufwendigen und teuren Gitter-Spektrometern und Fourier-Transform-Spektrometern werden Photometer für spektrale Messungen im nahen bis fernen Infrarotbereich benutzt. Mittels spezieller schmalbandiger Bandpassfilter werden definierte Bereiche aus dem Gesamtspektrum herausgefiltert und für die Messung der stoffspezifischer Eigenschaften verwendet. Für einfache Messaufgaben, reichen häufig ein bzw. zwei spektrale Kanäle aus. Dafür werden Infrarot-Detektoren bereits durch den Hersteller mit Schmalbandfiltern ausgerüstet. In EP 0 536 727 ist ein Multispektralsensor beschrieben, der simultan in mehreren Spektralkanälen messen kann, indem ein interner Strahlteiler die zu messende Strahlung in mehrere Kanäle teilt und über Spektralfilter auf infrarotempfindliche Sensorelemente leitet. Aufgrund des Wirkprinzips ist die Anzahl der Kanäle begrenzt und die Gesamtstrahlungsleistung wird durch die Strahlteilung auf die einzelnen Kanäle verteilt, wodurch das Signal/Rausch-Verhältnis sinkt.

Eine weitere bevorzugte Lösung stellt die Verwendung eines durchstimmbaren Filters auf der Basis eines Fabry-Perot-Filters (FP-Filter) dar. Zwei Reflektoren (Bragg-Reflektoren aus Stapeln hoch- und niedrigbrechender dielektrischer Schichtpaare) werden in geringem Abstand planparallel zueinander angeordnet und bilden im Zwischenraum einen optischen Resonator. Das Filter transmittiert nur Strahlung, deren Wellenlänge λₘ die (stark vereinfachte) Interferenzbedingung λₘ=2*n*d/m erfüllen, wobei n die Brechzahl des Mediums im Resonanzraum und m eine Ordnungszahl ist. Durch Variation des Abstandes der Reflektoren wird die Transmissionswellenlänge des Resonators verändert, so dass man eine Abstimmung des Filters über einen Wellenlängenbereich erreicht. Elektrostatische Antriebskräfte werden zur definierten Einstellung der Wellenlänge genutzt. Die Form der einzelnen Transmissionspeaks, auch Fringes genannt, ist sin²-förmig. Die Ordnungszahl m zeigt an, das die Transmissionspeaks periodisch auftreten. Der Abstand zwischen den benachbarten Transmissionspeaks wird Freier Spektralbereich FSR genannt und wird mit zunehmender Ordnungszahl immer kleiner. Meistens wünscht der Anwender von durchstimmbaren Filtern das Auftreten eines einzelnen Transmissionspeaks im Durchstimmbereich. Sind dies nur Transmissionspeaks einer gemeinsamen Ordnung, dann ist der Durchstimmbereich auf den Freien Spektralbereich FSR begrenzt. Die optische Mehrdeutigkeit wird in US 5,646,729 deshalb durch ein zusätzliches Cut-Off-Filter beseitigt, indem die höheren Interferenz-Ordnungen ausgeblendet werden.

In DE 102 26 305 wird z.B. beschrieben, dass mit drei HL-Doppelschichten, die aus niedrigbrechenden SiO₂-Schichten mit einer Brechzahl von etwa 1,4 und hochbrechenden Poly-Si-Schichten mit einer Brechzahl von etwa 3,3 bestehen, Reflexionsgrade von 97% im Spektralbereich von (3,1-4,8) µm erreicht werden können, womit im wesentlichen auch der Durchstimmbereich des Fabry-Perot-Interferometers vorgegeben ist.

In US 2003/0116711 A1 ist ein Infrarot-Gasanalysator beschrieben, der ein durchstimmbares Fabry-Perot-Filter, ein Breitbandfilter und einen Infrarot-Detektor für die Bestimmung des Kohlendioxid- und Wasserdampfgehaltes der Luft benutzt. Der Spaltabstand des Fabry-Perot-Filters wird so gewählt, dass ein Referenzsignal bei einer Wellenlänge von 3100 nm mit dem Transmissionspeak 2. Ordnung, d.h. mit einem Spaltabstand von 3100 nm gemessen wird. Durch Verringerung des Spaltabstandes auf 2590 nm kann der Wasserdampfgehalt ebenfalls mit dem Transmissionspeak 2. Ordnung bei etwa 2700 nm gemessen werden. Bei weiterer Verringerung des Spaltabstandes auf 2270 nm erhält man einen Transmissionspeak 1. Ordnung bei 4250 nm, der zur Messung des Kohlendioxidbereiches benutzt wird. Dabei wird der Transmissionsbereich des Breitbandfilters auf den Freien Spektralbereich des Fabry-Perot-Filters so abgestimmt, das die störenden 1. Ordnungen bei der Referenz- und Wasserdampf-Messung oberhalb von 4500 nm und die störende 2. Ordnung bei der Kohlendioxid-Messung unterhalb von 2600 nm ausgeblendet werden. Nach Möglichkeit würde man in der Infrarot-Absorptionsspektroskopie gerne in dem Bereich 3-12 µm oder den beiden Spektralbereichen 3-5 µm und 8-12 µm, die auch als atmosphärische Fenster bekannt sind, messen. Jedoch sind die Spektralbereiche so breit, dass, vorausgesetzt man verfügt über einen ultrabreiten Braggreflektor, Interferenzen höherer Ordnung auftreten müssen und zu mehrdeutigen Messungen führen.

Eine weitere Anordnung beruht auf der Verwendung von selektiv empfindlichen Detektorelementen, die im optischen Strahlengang nacheinander angeordnet sind. Das erste Detektorelement absorbiert die kurzwellige Strahlung im Spektralbereich 3 bis 5 µm vollständig und ist transparent für langwellige Strahlung im Spektralbereich 8 bis 12 µm, die das zweite Detektorelement absorbiert, das unmittelbar nach dem ersten Detektorelement angeordnet ist. Die Absorption von Strahlung im ersten und zweiten Detektorelement generiert jeweils elektrische Signale, die dem Spektralbereich 3 bis 5 µm und 8 bis 12 µm zugeordnet werden können und dann einer Auswertung zugeführt werden können.

Ein Aufbau mit einem durchstimmbaren Fabry-Perot-Interferometer ist auch von N. Neumann u.a. in "Tunable infrared detector with integrated micromachined Fabry-Perot filter"; Proceedings of SPIE-MOEMS and miniaturized Systems IV; Bd. 6466, Janaur 2007; Seiten 646606-1-646606-12; XP002455060 beschrieben worden.

### Aufgabenstellung

Der Erfindung liegt die Aufgabe zugrunde, Möglichkeiten zur Detektion von Stoffen und/oder Stoffkonzentrationen mit durchstimmbarem Fabry-Perot-Interferometer zu schaffen, das in einem oder mehreren breiten Spektralbändern durchgestimmt werden kann, ohne dass sich Mehrdeutigkeiten durch Interferenzen höherer Ordnung auf das Messergebnis auswirken.

Erfindungsgemäß wird die Aufgabe mit einer Anordnung die die Merkmale des Anspruchs 1 oder des Anspruchs 2 aufweist, gelöst. Die Erfindung ausgestaltende und weiterbildende Merkmale sind in den untergeordneten Ansprüchen bezeichnet.

Der Grundaufbau der erfindungsgemäßen Anordnung wird mit einem infrarotoptischen Eintrittsfenster, einem durchstimmbaren Fabry-Perot-Interferometer und einem Strahlteiler gebildet, die auf einer gemeinsamen optischen Hauptachse angeordnet sind und weist außerdem mindestens zwei infrarotoptische Detektoren auf. Auf die infrarotoptischen Detektoren sollen die Teilstrahlbündel nach einer Strahlteilung senkrecht auftreffen. Ein Gehäuse mit elektrischen Anschlüssen für das durchstimmbare Fabry-Perot-Interferometer und die infrarotoptischen Detektoren, in dem das infrarotoptische Eintrittsfenster montiert ist, schirmt Fabry-Perot-Interferometer, Strahlteiler und die Detektoren vor schädlichen Umwelteinflüssen ab.

Die von einer geeigneten Quelle emittierte elektromagnetische Strahlung durchdringt ein Medium, beispielsweise ein Gasgemisch oder eine Flüssigkeit, in der mindestens ein zu detektierender Stoff enthalten ist oder sein kann, bevor sie über das Infrarotfenster in das Gehäuse eintritt und darin mit den infrarotoptischen Detektoren wellenlängenselektiv unter Berücksichtigung des Absorptionsverhaltens des/der Stoffe(s) eine Detektion erfolgen kann.

Mit dem Fabry-Perot-Interferometer kann durch Beeinflussung des jeweiligen Spaltmasses zwischen seinen Reflektoren eine Auswahl eines Wellenlängenspektrums bzw. einer gezielten Wellenlänge vorgenommen werden, für die ein jeweiliger Stoff spezifisch ist.

Um das Problem der Einflussnahme von ggf. auftretenden Interferenzen höherer Ordnungen zu vermeiden, kann mit der Aufteilung der aus dem Fabry-Perot-Interferometer austretenden elektromagnetischen Strahlung in mindestens zwei Teilstrahlbündel, die in verschiedene Richtungen emittiert werden, entgegengetreten werden, die dann auf jeweils einen infrarotoptischen Detektor auftreffen. Dabei erfolgt vor dem Auftreffen eine Filterung, so dass jeweils ein ganz spezifischer Wellenlängenbereich auf den jeweiligen infrarotoptischen Detektor auftreffen kann.

So kann eines der Teilstrahlbündel, dass von einem dichroitischen Strahlteiler in Richtung auf einen infrarotoptischen Detektor, der außerhalb der optischen Hauptachse angeordnet ist, reflektiert wird, bereits durch eine Bandpassfilterung durch den Strahlteiler einen begrenzten Wellenlängenbereich aufweisen, der sich vom Wellenlängenbereich, des Teilstrahlbündels für den der Strahlteiler transparent ist, unterscheidet. Letztgenanntes Teilstrahl-Teilstrahlbündel trifft in oder parallel zur optischen Hauptachse dann auf einen zweiten infrarotoptischen Detektor. Mit der so erreichbaren Wellenlängentrennung und Aufteilung auf die infrarotoptischen Detektoren kann der unerwünschte Effekt, der von ggf. auftretenden Interferenzen höherer Ordnungen, ggf. auch von anderen Stoffen, die nicht detektiert werden sollen, vermieden werden.

Wird ein Strahlteiler ohne eine solche Bandpassfilterwirkung eingesetzt, erfolgt die Teilung der Strahlung in Teilstrahlbündel, die ein gleiches Wellenlängenspektrum aufweisen. Die Teilstrahlbündel werden jedoch so vom Strahlteiler reflektiert, dass zumindest ein Teilstrahlbündel auf einen infrarotoptischen Detektor auftrifft, der nicht in der optischen Hauptachse angeordnet ist. Im Strahlengang der elektromagnetischen Strahlung ist vor jedem der infrarotoptischen Detektoren ein Bandpassfilter angeordnet. Die Bandpassfilter sind jeweils für unterschiedliche Wellenlängenbereiche transparent. So ist ein Bandpassfilter im Wellenlängenbereich von 3 bis 5 µm und ein zweites Bandpassfilter im Wellenlängenbereich 8 bis 12 µm transparent.

Günstig ist es außerdem Bandpassfilter einzusetzen, die ein Stoppband des Fabry-Perot-Interferometers berücksichtigen, innerhalb dessen elektromagnetische Strahlung in einem Wellenlängenbereich von den Reflektoren des Fabry-Perot-Interferometers reflektiert werden kann. Der Wellenlängenbereich eines Stoppbandes kann vorteilhaft innerhalb eines Transmissionsbereichs der Bandpassfilter liegen.

Bei der erfindungsgemäßen Anordnung besteht außerdem die Möglichkeit das Fabry-Perot-Interferometer und die infrarotoptischen Detektoren an eine elektronische Auswerte- und Steuereinheit anzuschließen. So kann am Fabry-Perot-Interferometer ein bestimmtes Spaltmaß eingestellt werden, um einen gewünschten Stoff detektieren zu können. Dabei kann dann, dass der elektronischen Auswerte- und Steuereinheit bekannte Spaltmaß, also auch die jeweilige Interferenzwellenlänge, bei der Auswertung der Messsignale der infrarotoptischen Detektoren berücksichtigt werden.

Für die Durchstimmung sollte das Spaltmaß im Bereich von 1 bis 10 µm verändert werden können.

Nachfolgend soll die Erfindung an Hand von Ausführungsbeispielen näher erläutert werden.

Dabei zeigen:
- Fig. 1: eine schematische Darstellung eines herkömmlichen Infrarotdetektors mit durchstimmbarem Fabry-Perot-Filter (Stand der Technik);
- Fig. 2: eine stark vereinfachte, schematische Darstellung eines herkömmlichen Infrarotdetektors mit durchstimmbarem Fabry-Perot-Filter (Stand der Technik);
- Fig. 3: Transmissionsspektren eines Breitbandfilters und eines Fabry-Perot-Interferometers beim Durchstimmen;
- Fig. 4: eine schematische Darstellung eines ersten Beispiels einer erfindungsgemäßen Anordnung mit durchstimmbarem Fabry-Perot-Interferometer und dichroitischem Strahlteiler;
- Fig. 5: Transmissionsspektren eines Fabry-Perot-Interferometers mit dichroitischem Strahlteiler beim Durchstimmen sowie der Reflexion von Multibandreflektoren und des dichroitischen Strahlteilers;
- Fig. 6: eine schematische Darstellung eines weiteren Beispiels mit durchstimmbarem Fabry-Perot-Interferometer und unselektivem Strahlteiler und
- Fig. 7: eine schematische Darstellung eines zweiten Beispiels mit durchstimmbarem Fabry-Perot-Interferometer und Mikroprismen-Strahlteiler.

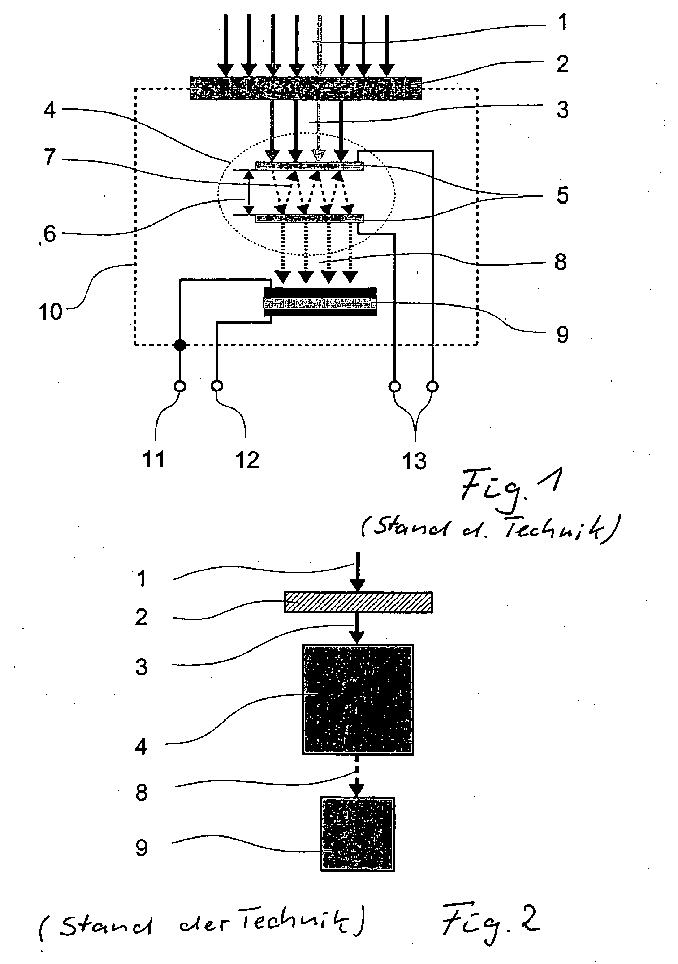

Die in Fig. 1 dargestellte Anordnung zeigt eine herkömmliche Verwendung eines durchstimmbaren Fabry-Perot-Interferometers 4 mit einem Detektor 9 zur Absorptionsanalyse. Die zu analysierende Strahlung 1 gelangt über einen Cut-Off- oder Breitband-Filter 2 in das Detektorgehäuse 10. Das gefilterte Strahlbündel 3 trifft auf das durchstimmbare Fabry-Perot-Interferometer 4. An den Reflektoren 5 wird die Strahlung mehrfach reflektiert, es kommt zu einer Vielfachinterferenz 7 innerhalb des Spaltes. Die Zentralwellenlänge λₘ der konstruktiven Interferenz kann durch Änderung des Spaltabstands 6 verändert werden, was durch Anlegen einer Spannung 13 an das Fabry-Perot-Interferometer 4 hervorgerufen wird. Im Strahlengang hinter dem Fabry-Perot-Interferometer 4 ist ein Infrarot-Detektor 9 angeordnet, der das schmalbandige Strahlbündel 8 in ein elektrisches Signal 12 umwandelt. Das Gehäuse 10 und der andere Pol der Signalspannung 12 sind mit dem Masseanschluss 11 verbunden. Die Cut-Off-Wellenlänge oder die Bandbreite des Filters 2 sind so gewählt, dass die Entstehung von Oberwellen bei der Vielfachinterferenz 7 verhindert wird. Cut-Off-Filter oder Breitband-Filter 2, Fabry-Perot-Interferometer 4 und Infrarot-Detektor 9 sind auf einer gemeinsamen optischen Hauptachse angeordnet.

In Fig. 2 ist die schematische Darstellung nach Fig. 1 weiter vereinfacht und auf wesentliche Elemente reduziert gezeigt.

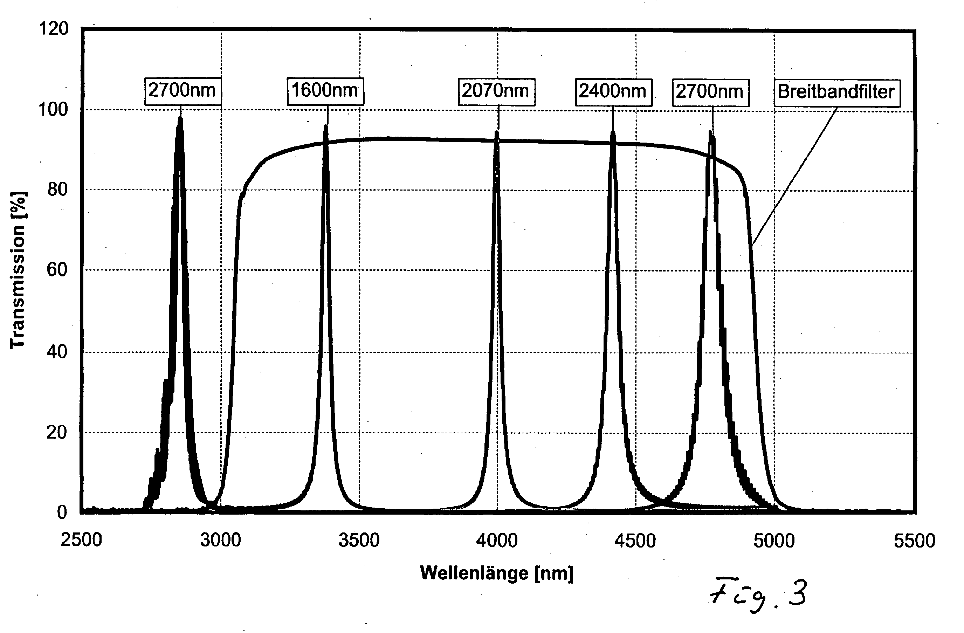

In Fig. 3 sind das Transmissionsspektrum eines Breitband-Filters (BBF) 2 und die Transmissionspeaks eines durchstimmbaren Fabry-Perot-Interferometers 4 für unterschiedliche Spaltabstände 6 gezeigt. Die Reflektoren des Fabry-Perot-Interferometers 4 sind als Single-Band-Reflektoren für den Spektralbereich 3 bis 5 µm ausgelegt. Im Spektralbereich 3 bis 5 µm zeigen die Reflektoren 5 eine sehr hohe Reflexion bei gleichzeitig sehr geringer Transmission. Außerhalb dieses Bandes mit hoher Reflexion (Stoppband) findet man sowohl bei kürzeren als auch längeren Wellenlängen Bereiche und Banden mit hoher Transmission. Im Ruhezustand hat der Luftspalt des Fabry-Perot-Filters einen Abstand von 2700 nm. Die Interferenzen 1. und 2. Ordnung entstehen deshalb bei 4780 nm und 2850 nm, was einem Freien Spektralbereich FSR von 1930 nm entspricht. Bei einem Spaltabstand 6 von 2400 nm beobachtet man die Interferenz 1. Ordnung bei 4420 nm. Bei einem Spaltabstand von 2070 nm liegt die Zentralwellenlänge der Interferenz 1. Ordnung bei 4000 nm. Bei weiterer Verringerung des Spaltabstands auf 1600 nm verschiebt sich die Interferenz 1. Ordnung zu einer Wellenlänge von 3375 nm. Damit ist der Durchstimmbereich, der vom Reflexionsbereich der Reflektoren und dem Freien Spektralbereich des Fabry-Perot-Interferometers 4 bestimmt wird, nahezu ausgeschöpft. Ein Breitband-Filter 2 verhindert, das die Interferenzen höherer Ordnung, z.B. bei einem Spaltabstand von 2700 nm, unterhalb von 3000 nm ein Signal erzeugen. Zusätzlich blockt das Breitband-Filter 2 auch Strahlung mit einer Wellenlänge über 5000 nm, welche das Fabry-Perot-Interferometers 4 sonst passieren lassen würde.

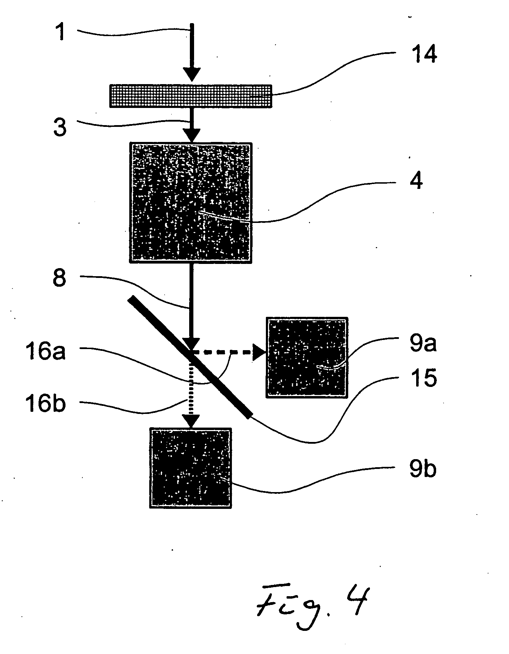

Die in Fig. 4 dargestellte Anordnung, zeigt ein erstes Beispiel einer erfindungsgemäßen Anordnung mit durchstimmbarem Fabry-Perot-Interferometer 4 und dichroitischem Strahlteiler 15 zur Absorptionsanalyse in den Spektralbereichen von 3-5 µm und 8-12 µm. Über ein Bandpassfilter 14, das mindestens im Spektralbereich von etwa 3-5 µm und 8-12 µm transparent ist und den Bereich von etwa 5-8 µm blockt, gelangt die von einer nicht dargestellten Quelle emittierte elektromagnetische Strahlung, nach Durchdringung eines Mediums in dem ein zu detektierender Stoff enthalten ist oder sein kann (ebenfalls nicht dargestellt), auf ein durchstimmbares Fabry-Perot-Interferometer 4, dessen Reflektoren Stoppbänder im Spektralbereich von 3-5 µm und 8-12 µm aufweisen. Hinter dem Fabry-Perot-Interferometer 4 ist ein dichroitischer Strahlteiler 15 in einem Winkel von 45° angeordnet, auf dem das schmalbandige Strahlenbündel 8 auftrifft. Der dichroitische Strahlteiler 15 kann als Kurzpass oder Langpass ausgeführt sein, so dass entweder kurzwellige oder langwellige Strahlung 16b den Strahlteiler 15 in der Richtung der einfallenden Strahlung (optische Hauptachse) passiert. Dementsprechend wird der langwellige oder der kurzwellige Strahlungsanteil 16a reflektiert. Da der Ausfallswinkel gleich dem Einfallswinkel ist, bildet der reflektierte Strahlungsanteil 16a bei einem unter 45° angeordneten Strahlteilers 15 einen Winkel von 90° zum transmittierten Strahlungsanteil 16b. Der transmittierte kurzwellige Strahlungsanteil 16b, bei Verwendung eines Kurzpasses als Strahlteiler 15, gelangt auf den infrarotoptischen Detektor 9b und der reflektierte langwellige Strahlungsanteil 16a gelangt auf den infrarotoptischen Detektor 9a. Bei Verwendung eines Langpasses gelangt der transmittierte langwellige Strahlungsanteil 16b auf den infrarotoptischen Detektor 9b und der reflektierte kurzwellige Strahlungsanteil 16a gelangt auf den infrarotoptischen Detektor 9a.

In nicht dargestellter Form, können Fabry-Perot-Interferometer 4 und die infrarotoptischen Detektoren 9a und 9b an eine elektronische Auswerte- und Steuereinheit, für die Beeinflussung des Fabry-Perot-Interferometers 4 und die Auswertung angeschlossen werden, was auch auf die anderen Ausführungsbeispiele zu treffen kann.

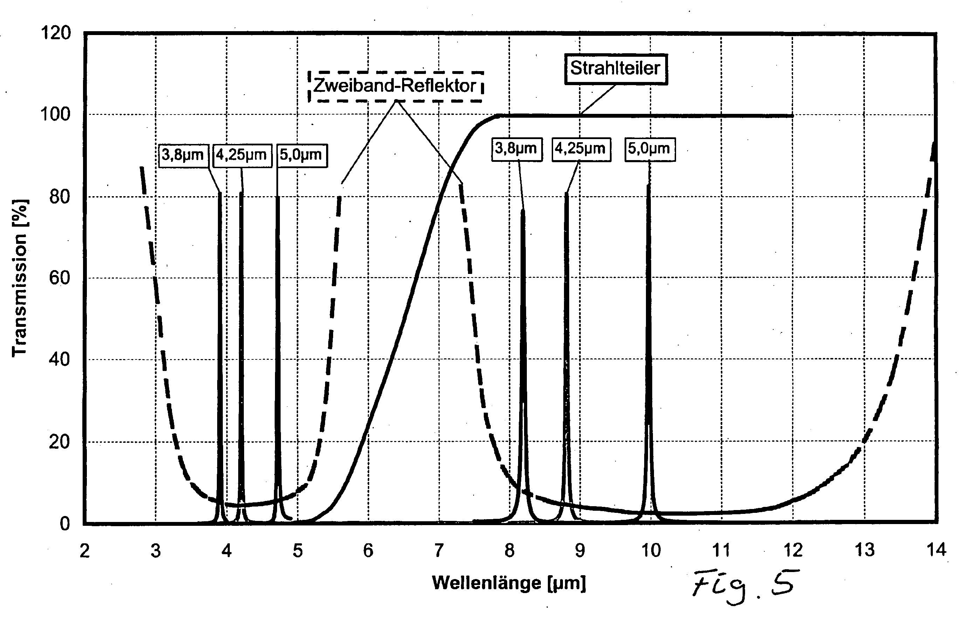

In Fig. 5 sind die Transmissionspeaks eines durchstimmbaren, Fabry-Perot-Interferometers 4 für Spaltabstände von 5,0 µm, 4,25 µm und 3,0 µm gezeigt. Die Reflektoren des Fabry-Perot-Interferometers 4 weisen zwei Stoppbänder auf und sind für die Spektralbereiche 3,5 - 5 µm und 8 - 12 µm ausgelegt. Zwischen 5 µm und 8 µm existiert ein Bereich mit hoher Transmission (Passband). Im Ruhezustand des Fabry-Perot-Interferometers 4 hat der Luftspalt einen Abstand von 5,0 µm. Die Interferenzen 1. und 2. Ordnung entstehen deshalb bei 10,6 µm und 4,7 µm. Bei einem Spaltabstand 6 von 4,25 µm beobachtet man die Interferenz 1. und 2. Ordnung bei 8,8 µm und 4,2 µm. Bei einem Spaltabstand 6 von 3,8 µm liegt die Zentralwellenlänge der Interferenz 1. Ordnung bei 8,1 µm und die Interferenz 2. Ordnung wird bei 3,9 µm ausgebildet.

Die Abweichung von der stark vereinfachten Formel λₘ = 2*n*d/m zwischen den Wellenlängen der Interferenzen und dem Spaltmaß wird durch eine wellenlängenabhängige Änderung der Phase der reflektierten Strahlung bei der Vielfach-Interferenz verursacht.

In dem Diagramm ist ebenfalls der Transmissionsgrad des Langpass-Strahlteilers 15 eingezeichnet.

Bis zu einer Wellenlänge von etwa 5 µm zeigt der Strahlteiler 15 einen Transmissionsgrad von nahezu 0% und steigt bis zu einer Wellenlänge von etwa 8 µm auf etwa 100% und ist bis etwa 12 µm transparent. Auf diese Weise reflektiert der Strahlteiler 15 die kurzwelligen Interferenzen, die bei Spaltabständen von 5,0 µm, 4,25 µm und 3,8 µm bei einer Wellenlänge von 4,7 µm, 4,2 µm und 3,9 µm auftreten auf den infrarotoptischen Detektor 9a (siehe Fig.4), während die langwelligen Interferenzen auf den infrarotoptischen Detektor 9b gelangen. Durch die Strahlteilung ist somit ein eindeutiger Zusammenhang zwischen dem Signal der infrarotoptischen Detektoren 9a und 9b und der jeweiligen Zentralwellenlänge eines Transmissionspeaks bei gegebenem Spaltabstand 6 hergestellt.

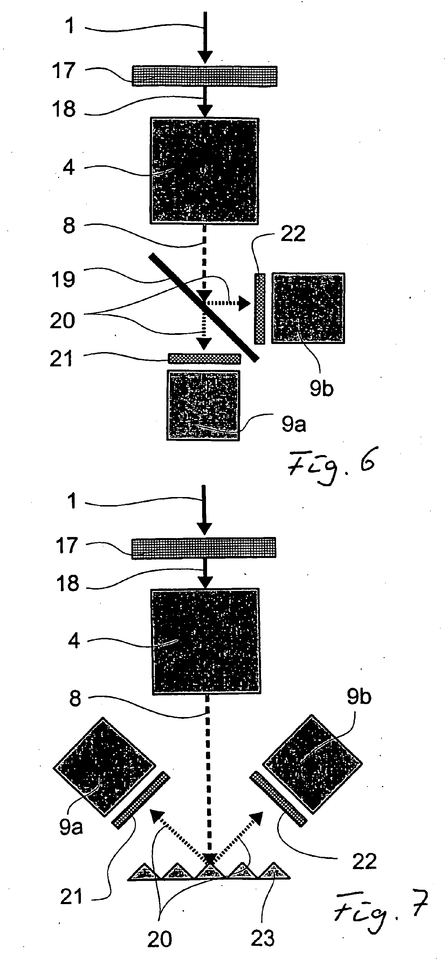

Das in Fig. 6 dargestellte Beispiel, einer erfindungsgemäßen Anordnung, baut auf das in Fig. 4 gezeigte Beispiel auf. Ein Infrarot-Fenster 17, z.B. aus entspiegeltem Silizium, stellt sicher, dass die Strahlung 1 in den beiden Spektralbereichen 3 - 5 µm und 8 - 12 µm nur wenig geschwächt wird und als mehr oder weniger gefilterte Strahlung 18 in das Fabry-Perot-Interferometer 4 gelangt. Beim Strahlteiler 19 handelt es sich jedoch um einen unselektiven Strahlteiler aus einem hochbrechenden, dielektrischen Material, z.B. Silizium. Dieser Silizium-Strahlteiler teilt das schmalbandige Strahlbündel 8 nahezu wellenlängenunabhängig etwa im Verhältnis 1:1 in die Strahlbündel 20 auf, die auf die infrarotoptischen Detektoren 9a und 9b auftreffen. Zusätzliche Breitbandfilter 21 und 22 für die Spektralbereiche 3 - 5 µm und 8 - 12 µm sorgen in diesem Fall für die eindeutige Zuordnung der Transmissionspeaks zu den jeweiligen Detektoren 9a und 9b.

In Fig. 7 ist eine weitere Ausführungsform der Erfindung dargestellt. Als Strahlteiler 19 wird jedoch ein Strahlteiler 23 in Form von schräg im Winkel geneigten keil- oder pyramidenförmigen Flächen (Mikro-V-Gräben oder Mikroprismen) mit einer hochreflektiven Goldbeschichtung benutzt, wodurch eine Strahlaufteilung auf zwei oder vier Strahlbündel 20 erreicht wird. Zusätzliche Breitbandfilter 21 und 22 für die Spektralbereiche 3 - 5 µm und 8 - 12 µm sorgen auch in diesem Fall für die eindeutige Zuordnung der Transmissionspeaks zu jeweiligen infrarotoptischen Detektoren 9a und 9b.

### Bezugszeichenliste:

- 1: IR-Strahlung
- 2: Cut-Off-Filter oder Breitband-Filter
- 3: gefilterte IR-Strahlung
- 4: Fabry-Perot-Interferometer
- 5: Reflektor
- 6: veränderlicher Spaltabstand d
- 7: Vielstrahlinterferenz
- 8: schmalbandiges Strahlungsbündel
- 9: Infrarotoptischer Detektor
- 9a, b: Infrarotoptischer Detektor
- 10: Gehäuse
- 11: Masse-Anschluss
- 12: Signal-Anschluss
- 13: Spannungsanschlüsse für das Durchstimmen des Fabry-Perot-Interferometers
- 14: Bandpassfilter
- 15: dichroitischer Strahlteiler
- 16a, b: lang/kurzwelliges Teilstrahlenbündel
- 17: Infrarotfenster
- 18: IR-Strahlung nach Passieren des Infrarotfensters
- 19: Strahlteiler
- 20: Teilstrahlenbündel
- 21: Bandpassfilter
- 22: Bandpassfilter
- 23: Strahlteiler

## Patentansprüche

1. Anordnung zur Bestimmung von Stoffen und/oder Stoffkonzentrationen durch zeitgleiche Absorptionsanalyse in unterschiedlichen Spektralbereichen mit einem durchstimmbaren Fabry-Perot-Interferometer, bei der
von einer Quelle emittierte elektromagnetische Strahlung durch ein Infrarotfenster (14, 17) in ein Gehäuse (10) auf ein durchstimmbares Fabry-Perot-Interferometer (4) gerichtet ist, das durch Beeinflussung des Spaltmaßes zwischen seinen Reflektoren eine Auswahl eines Wellenlängenspektrums oder einer Wellenlänge, das/die für einen jeweiligen Stoff spezifisch sind/ist, ermöglicht, und dessen Reflektoren Stoppbänder im Spektralbereich von 3 µm bis 5 µm und 8 µm bis 12 µm aufweisen,
**dadurch gekennzeichnet, dass**
das Infrarotfenster (14, 17) ein Bandpassfilter ist, das mindestens in einem Spektralbereich von 3 µm bis 5 µm und 8 µm bis 12 µm transparent ist, und den Bereich von 5 µm bis 8 µm blockt und
das Infrarotfenster (14, 17), das Fabry-Perot-Interferometer (4) und ein Strahlteiler (15) auf einer gemeinsamen optischen Hauptachse angeordnet sind;
der Strahlteiler (15) ein als Kurzpass oder Langpass ausgeführter dichroitischer Strahlteiler zur Absorptionsanalyse in den Spektralbereichen 3 µm bis 5 µm und 8 µm bis 12 µm ist;
durch das Fabry-Perot-Interferometer (4) transmittierte elektromagnetische Strahlung mittels des die Strahlung in mindestens zwei Teilstrahlbündel (16a, 16b) zerlegenden Strahlteilers (15) richtet und dabei zumindest ein Teilstrahlbündel (16a) auf einen außerhalb der optischen Hauptachse angeordneten infrarotoptischen Detektor (9a) durch Reflexion vom Strahlteiler (15) und mindestens ein weiteres Teilstrahlbündel (16b) auf einen weiteren infrarotoptischen Detektor (9b) auftrifft; so dass der langwellige und der kurzwellige Strahlungsanteil auf den jeweiligen optischen Detektor (9a, 9b) auftrifft;
und **dadurch** ein eindeutiger Zusammenhang zwischen dem Signal der Detektoren (9a, 9b) und der Zentralwellenlänge eines Transmissionspeaks des Fabry-Perot-Interferometers (4) bei gegebenem Spaltabstand hergestellt wird.

2. Anordnung zur Bestimmung von Stoffen und/oder Stoffkonzentrationen durch zeitgleiche Absorptionsanalyse in unterschiedlichen Spektralbereichen mit einem durchstimmbaren Fabry-Perot-Interferometer, bei der
von einer Quelle emittierte elektromagnetische Strahlung durch ein Infrarotfenster (14, 17) in ein Gehäuse (10) auf ein durchstimmbares Fabry-Perot-Interferometer (4) gerichtet ist, das durch Beeinflussung des Spaltmaßes zwischen seinen Reflektoren eine Auswahl eines Wellenlängenspektrums oder einer Wellenlänge, das/die für einen jeweiligen Stoff spezifisch sind/ist, ermöglicht, und dessen Reflektoren Stoppbänder im Spektralbereich von 3 µm bis 5 µm und 8 µm bis 12 µm aufweisen,
**dadurch gekennzeichnet, dass**
das Infrarotfenster (14, 17), das Fabry-Perot-Interferometer (4) und ein Strahlteiler (19, 23) auf einer gemeinsamen optischen Hauptachse angeordnet sind;
durch das Fabry-Perot-Interferometer (4) transmittierte elektromagnetische Strahlung mittels des die Strahlung in mindestens zwei Teilstrahlbündel (16a, 16b, 20) zerlegenden Strahlteilers (19, 23) richtet und dabei zumindest ein Teilstrahlbündel (16a, 20) auf einen außerhalb der optischen Hauptachse angeordneten infrarotoptischen Detektor (9a) durch Reflexion vom Strahlteiler (19, 23) und mindestens ein weiteres Teilstrahlbündel (16b, 20) auf einen weiteren infrarotoptischen Detektor (9b) auftrifft;
und vor den infrarotoptischen Detektoren (9a, 9b) jeweils ein Bandpassfilter (21, 22) angeordnet ist;
so dass jeweils ein spezifischer Wellenlängenbereich auf den jeweiligen optischen Detektor (9a, 9b) auftrifft; wobei
das eine Bandpassfilter (21) für einen Wellenlängenbereich zwischen 3 µm und 5 µm und das zweite Bandpassfilter (22) für einen Wellenlängenbereich zwischen 8 µm bis 12 µm transparent ist.

3. Anordnung nach Anspruch 1 oder 2, **dadurch gekennzeichnet, dass** der Strahlteiler (15, 19) in einem Winkel von 45° in Bezug zur optischen Hauptachse ausgerichtet und in der optischen Hauptachse mit dem Fabry-Perot-Interferometer (4) angeordnet ist.

4. Anordnung nach einem der Ansprüche 1 oder 3, **dadurch gekennzeichnet, dass** der Strahlteiler (15), in Richtung auf das Fabry-Perot-Interferometer (4) weisend, mit einer ein Bandpassfilter bildenden Beschichtung versehen ist.

5. Anordnung nach einem der vorhergehenden Ansprüche, **dadurch gekennzeichnet, dass** ein infrarotoptischer Detektor (9b) in einem Winkel von 90° in Bezug zur optischen Hauptachse und ein zweiter infrarotoptischer Detektor (9a) in der optischen Hauptachse angeordnet ist.

6. Anordnung nach Anspruch 2, **dadurch gekennzeichnet, dass** der Strahlteiler (23) mindestens zwei in einem Winkel geneigte reflektierende Flächen aufweist, von denen Teilstrahlbündel (20) mit gleicher spektraler Zusammensetzung über jeweils ein Bandpassfilter ((21, 22) auf infrarotoptische Detektoren (9a, 9b) reflektiert werden.

7. Anordnung nach Anspruch 6, **dadurch gekennzeichnet, dass** der Strahlteiler (23) eine keil- oder pyramidenförmige, reflektierende Oberfläche aufweist.

8. Anordnung nach einem der vorhergehenden Ansprüche, **dadurch gekennzeichnet, dass** das Fabry-Perot-Interferometer (4) und die infrarotoptischen Detektoren (9a, 9b) gemeinsam an eine elektronische Auswerte- und Steuereinheit angeschlossen sind.

9. Anordnung nach einem der Ansprüche 2 bis 8, **dadurch gekennzeichnet, dass** das Infrarotfenster (14) als Bandpassfilter, das für elektromagnetische Strahlung in den Wellenlängenbereichen 3 µm bis 5 µm und 8 bis 12 µm transparent ist, ausgebildet ist.

## Claims

1. An arrangement for determining substances and/or substance concentrations by simultaneous absorption analysis in different spectral ranges using an adjustable Fabry-Pérot interferometer, wherein
electromagnetic radiation emitted by a source is directed through an infrared window (14, 17) into a housing (10) onto an adjustable Fabry-Pérot interferometer (4) which enables a selection of a wavelength spectrum or of a wavelength which are/is specific to a respective substance by influencing the clearance between its reflectors and whose reflectors have stopbands in the spectral range from 3 µm to 5 µm and 8 µm to 12 µm,
**characterized in that**
the infrared window (14, 17) is a bandpass filter which is transparent in at least a spectral range from 3 µm to 5 µm and 8 µm to 12 µm and which cuts off the range from 5 µm to 8 µm; and
**in that** the infrared window (14, 17), the Fabry-Pérot interferometer (4) and a beam splitter (15) are arranged on a common main optical axis;
**in that** the beam splitter (15) is a dichroitic beam splitter configured as a short pass filter or as a long pass filter for absorption analysis in the spectral ranges 3 µm to 5 µm and 8 µm to 12 µm;
**in that** electromagnetic radiation transmitted through the Fabry-Pérot interferometer (4) is directed by means of the beam splitter (15) breaking the radiation down into at least two part beams (16a, 16b) and in so doing at least one part beam (16a) is incident onto an infrared optical detector (9a) arranged outside the main optical axis by reflection from the beam splitter (15) and at least one further part beam (16b) is incident onto a further infrared optical detector (9b);
so that the longwave and the short wave radiation portions are incident onto the respective optical detector (9a, 9b);
and thereby an unambiguous relationship is established between the signal of the detectors (9a, 9b) and the central wavelength of a transmission peak of the Fabry-Pérot interferometer (4) with a given clearance.

2. An arrangement for determining substances and/or substance concentrations by simultaneous absorption analysis in different spectral ranges using an adjustable Fabry-Pérot interferometer, wherein
electromagnetic radiation emitted by a source is directed through an infrared window (14, 17) into a housing (10) onto an adjustable Fabry-Pérot interferometer (4) which enables a selection of a wavelength spectrum or of a wavelength which are/is specific to a respective substance by influencing the clearance between its reflectors and whose reflectors have stopbands in the spectral range from 3 µm to 5 µm and 8 µm to 12 µm,
**characterized in that**
the infrared window (14, 17), the Fabry-Pérot interferometer (4) and a beam splitter (19, 23) are arranged on a common main optical axis;
**in that** electromagnetic radiation transmitted through the Fabry-Pérot interferometer (4) is directed by means of the beam splitter (19, 23) breaking the radiation down into at least two part beams (16a, 16b, 20) and in so doing at least one part beam (16a, 20) is incident onto an infrared optical detector (9a) arranged outside the main optical axis by reflection from the beam splitter (19, 23) and at least one further part beam (16b, 20) is incident onto a further infrared optical detector (9b);
and a respective bandpass filter (21, 22) is arranged before the infrared optical detectors (9a, 9b);
so that a respective specific wavelength range is incident onto the respective optical detector (9a, 9b); wherein
the one bandpass filter (21) is transparent for a wavelength range between 3 µm and 5 µm and the second bandpass filter (22) is transparent for a wavelength range between 8 µm to 12 µm.

3. An arrangement in accordance with either of claims 1 or 2, **characterized in that** the beam splitter (15, 19) is aligned at an angle of 45° with respect to the main optical axis and is arranged in the main optical axis with the Fabry-Pérot interferometer (4).

4. An arrangement in accordance with either of claims 1 or 3, **characterized in that** the beam splitter (15) is provided, facing the Fabry-Pérot interferometer (4), with a coating forming the bandpass filter.

5. An arrangement in accordance with one of the preceding claims, **characterized in that** an infrared optical detector (9b) is arranged at an angle of 90° with respect to the main optical axis and a second infrared optical detector (9a) is arranged in the main optical axis.

6. An arrangement in accordance with claim 2, **characterized in that** the beam splitter (23) has at least two reflecting surfaces inclined at an angle from which part beams (20) having the same spectral composition are reflected via a respective bandpass filter (21, 22) onto infrared optical detectors (9a, 9b).

7. An arrangement in accordance with claim 6, **characterized in that** the beam splitter (23) has a wedge-shaped or pyramidal reflecting surface.

8. An arrangement in accordance with one of the preceding claims, **characterized in that** the Fabry-Pérot interferometer (4) and the infrared optical detectors (9a, 9b) are together connected to an electronic evaluation and control unit.

9. An arrangement in accordance with one of the claims 2 to 8, **characterized in that** the infrared window (14) is configured as a bandpass filter which is transparent for electromagnetic radiation in the wavelength ranges 3 µm to 5 µm and 8 to 12 µm.

## Revendications

1. Dispositif pour déterminer des substances et/ou des concentrations de substances au moyen de l'analyse par absorption simultanée dans différentes régions spectrales avec un interféromètre de Fabry-Pérot accordable, sur lequel
du rayonnement électromagnétique émis par une source est dirigé à travers une fenêtre infrarouge (14, 17) dans un boîtier (10) sur un interféromètre de Fabry-Pérot (4) accordable, qui, en influant sur la dimension de l'interstice entre ses réflecteurs, permet de sélectionner un spectre de longueur d'ondes ou une longueur d'onde qui est spécifique de la substance respective, et dont les réflecteurs présentent des bandes interdites dans la région spectrale de 3 µm à 5 µm et de 8 µm à 12 µm,
**caractérisé en ce que**
la fenêtre infrarouge (14, 17) est un filtre passe-bande qui est transparent au moins dans une région spectrale de 3 µm à 5 µm et de 8 µm à 12 µm et bloque la région de 5 µm, à 8 µm et,
**en ce que** la fenêtre infrarouge (14, 17), l'interféromètre de Fabry-Pérot (4) et un séparateur de faisceau (15) sont disposés sur un axe principal optique commun ;
**en ce que** le séparateur de faisceaux (15) est un séparateur de faisceaux dichroïque se présentant dans la version passe-haut ou passe-bas pour l'analyse par absorption dans les régions spectrales de 3 µm à 5 µm et de 8 µm à 12 µm ;
**en ce qu'**un rayonnement électromagnétique transmis par l'interféromètre de Fabry-Pérot (4) est orienté au moyen du séparateur de faisceaux (15) divisant le rayonnement en au moins deux faisceaux de rayons partiels (16a, 16b), au moins un faisceau de rayons partiel (16a) tombant, par réflexion sur le séparateur de faisceau, sur un détecteur optique infrarouge (9a), positionné à l'extérieur de l'axe principal optique, (15) et au moins un autre faisceau de rayons partiels (16b) tombant sur un autre détecteur optique infrarouge (9b), de sorte que la fraction du rayonnement d'ondes longues et la fraction du rayonnement d'ondes courtes tombent sur le détecteur optique respectif (9a, 9b) et qu'un rapport univoque soit ainsi établi entre le signal des détecteurs (9a, 9b) et la longueur d'onde centrale d'un pic de transmission de l'interféromètre de Fabry-Pérot (4) pour une distance d'interstice donnée.

2. Dispositif pour déterminer des substances et/ou des concentrations de substances au moyen de l'analyse par absorption simultanée dans différentes régions spectrales avec un interféromètre de Fabry-Pérot accordable, sur lequel
du rayonnement électromagnétique émis par une source est dirigé à travers une fenêtre infrarouge (14, 17) dans un boîtier (10) sur un interféromètre de Fabry-Pérot (4) accordable, qui, en influant sur la dimension de l'interstice entre ses réflecteurs, permet de sélectionner un spectre de longueur d'ondes ou une longueur d'onde qui est spécifique de la substance respective, et dont les réflecteurs présentent des bandes interdites dans la région spectrale de 3 µm à 5 µm et de 8 µm à 12 µm,
**caractérisé en ce que**
la fenêtre infrarouge (14, 17), l'interféromètre de Fabry-Pérot (4) et un séparateur de faisceau (15) sont disposés sur un axe principal optique commun ;
**en ce que** du rayonnement électromagnétique transmis par l'interféromètre de Fabry-Pérot (4) est orienté au moyen du séparateur de faisceaux (15) divisant le rayonnement en au moins deux faisceaux de rayons partiels (16a, 16b), au moins un faisceau de rayons partiel (16a) tombant, par réflexion sur le séparateur de faisceau, sur un détecteur optique infrarouge (9a), positionné à l'extérieur de l'axe principal optique, (15) et au moins un autre faisceau de rayons partiels (16b) tombant sur un autre détecteur optique infrarouge (9b), et **en ce qu'**un filtre passe-bande (21, 22) est placé respectivement devant chaque détecteur optique infrarouge(9a, 9b),
de sorte qu'une plage spécifique de longueurs d'ondes tombe sur le détecteur optique respectif (9a, 9b), sachant
qu'un des filtres passe-bande (21) est transparent pour une plage de longueurs d'ondes comprise entre 3 µm et 5 µm et le second filtre passe-bande (22) pour une plage de longueurs d'ondes comprise entre 8 µm et 12 µm.

3. Dispositif selon la revendication 1 ou 2, **caractérisé en ce que** le séparateur de faisceau (15, 19) est orienté selon un angle de 45° par rapport à l'axe principal optique et positionné dans l'axe principal optique avec l'interféromètre de Fabry-Pérot (4).

4. Dispositif selon l'une quelconque des revendications 1 ou 3, **caractérisé en ce que** le séparateur de faisceau (15) est doté, dans la direction pointant vers l'interféromètre de Fabry-Pérot (4), d'un revêtement formant un filtre passe-bande.

5. Dispositif selon l'une quelconque des revendications précédentes, **caractérisé en ce qu'**un détecteur optique infrarouge (9b) est positionné selon un angle de 90° par rapport à l'axe principal optique et un second détecteur optique infrarouge (9a) dans l'axe principal optique.

6. Dispositif selon la revendication 2, **caractérisé en ce que** le séparateur de faisceaux (23) présente au moins deux surfaces réfléchissantes inclinées selon un angle donné, par lesquelles des faisceaux de rayons partiels (20) présentant la même composition spectrale sont respectivement réfléchis par un filtre passe-bande (21, 22) sur des détecteurs (9a, 9b) optique infrarouge.

7. Dispositif selon la revendication 6, **caractérisé en ce que** le séparateur de faisceaux (23) présente une surface réfléchissante d'aspect cunéiforme ou pyramidal.

8. Dispositif selon l'une quelconque des revendications précédentes, **caractérisé en ce que** l'interféromètre de Fabry-Pérot (4) et les détecteurs optique infrarouge (9a, 9b) sont raccordés conjointement à une unité d'interprétation et de pilotage électronique.

9. Dispositif selon l'une quelconque des revendications 2 à 8, **caractérisé en ce que** la fenêtre infrarouge (14) est formée d'un filtre passe-bande qui est transparent pour du rayonnement électromagnétique dans les plages de longueurs d'ondes de 3 µm à 5 µm et de 8 µm à 12 µm.
